# EUROPEAN PATENT APPLICATION

(11) **EP 3 001 050 A1**
(43) Date of publication of application: **30.03.2016**
(21) Application number: 14306518.3
(22) Date of filing: 29.09.2014
(51) Int. Cl.: F16C 19/16, F16C 33/58, F16C 33/60

(54) **Rolling bearing**

(71) Applicant: Aktiebolaget SKF, 415 50 Göteborg (SE)
(72) Inventor: Lepine, Thomas, 37510 VILLANDRY (FR); Montboeuf, Bruno, 37390 CERCELLES (FR); Jansen, Daniel, 37000 TOURS (FR); Houart, Amandine, 41110 SAINT AIGNAN DU CHER (FR); Jullien, Tommy, 37100 TOURS (FR); Bussit, Sylvain, 37380 MONNAIE (FR)
(74) Representative: Myon, Gérard Jean-Pierre

(57) **Abstract**

The invention concerns a rolling bearing (1) comprising an inner ring (5), an outer ring (3) and rolling elements (7) arranged between the inner (5) and the outer ring (3), at least one of the inner (5) and outer (3) rings comprising a housing (34 ; 35 ; 55), two half-raceways (30, 32 ; 50, 52) mounted in the housing (34 ; 35 ; 55), each of the half-raceways comprising a contact surface (300 ; 320) adapted to make a contact with the rolling elements (7), and at least one pre-stressing element (36 ; 38, 39 ; 58, 59) arranged between the housing (34 ; 35 ; 54) and one of the half-raceways (30, 32 ; 50, 52). The half-raceways are formed by frustoconical rings and the contact surfaces (300; 320) of the half-raceways are frustoconical.

## Description

### TECHNICAL FIELD OF THE INVENTION

The invention relates to a rolling bearing, in particular a rolling bearing for use in a steering column of a motor vehicle.

### BACKGROUND OF THE INVENTION

Rolling bearings comprising at least one ring provided with two half-raceways formed by metallic rings mounted in a housing and pre-stressed by an elastic element are often used in steering columns to mitigate the effects of column misalignment.

EP-A-1 985 519 discloses such a rolling bearing, in which the half-raceways have a complex shape including a curved contact surface. Such a design implies relatively high manufacturing costs. Moreover, the contact between the curved contact surfaces and the rolling elements takes place along a contact line, which implies friction and a poor tolerance of manufacturing inaccuracies resulting in production of noise.

### SUMMARY OF THE INVENTION

The aim of the invention is to provide a new rolling bearing having a structure which reduces manufacturing costs and improves liability.

To this end, the invention concerns a rolling bearing comprising an inner ring, an outer ring and rolling elements arranged between the inner and the outer ring, at least one of the inner and outer rings comprising a housing, two half-raceways mounted in the housing, each of the half-raceways comprising a contact surface adapted to make a contact with the rolling elements, and at least one pre-stressing element arranged between the housing and one of the half-raceways. This rolling bearing is characterized in that the half-raceways are formed by frustoconical rings, and in that the contact surfaces of the half-raceways are frustoconical.

Thanks to the invention, the half-raceways have a more simple shape, which reduces the manufacturing costs and improve the radial compactness of the rolling bearing. Moreover, the friction in the bearing is reduced by the fact that there is only one contact point between each half-raceway and the balls.

According to further aspects of the invention which are advantageous but not compulsory, such a rolling bearing may incorporate one or several of the following features:
- The rolling elements are balls.
- The housing comprises at least one retaining portion adapted to retain the pre-stressing element.
- The retaining portion is inclined toward the rolling elements.
- The rolling bearing comprises a cage adapted to keep the rolling elements angularly spaced.
- The cage is arranged radially between one of the half-raceways of one of the rings of the bearing and the other ring of the bearing.
- The pre-stressing element is an elastomeric ring.
- The pre-stressing element is a wave spring.
- The half-raceways are made from stamped metal sheets.
- The half-raceways are made from a synthetic material, in particular a plastic material.
- The housing comprises a convex portion which is in contact with one of the half-raceways.
- The ring of the bearing which comprises half-raceways comprises two pre-stressing elements.
- Both rings of the rolling bearing comprise a housing, two half-raceways and at least one pre-stressing element.

### BRIEF DESCRIPTION OF THE DRAWINGS

The invention will now be explained in reference to the annexed figures, as an illustrative example. In the annexed figures:
- figure 1 is a partial sectional view of a rolling bearing according to a first embodiment of the invention;
- figure 2 is a partial sectional view of a rolling bearing according to a second embodiment of the invention.

### DETAILED DESCRIPTION OF SOME EMBODIMENTS

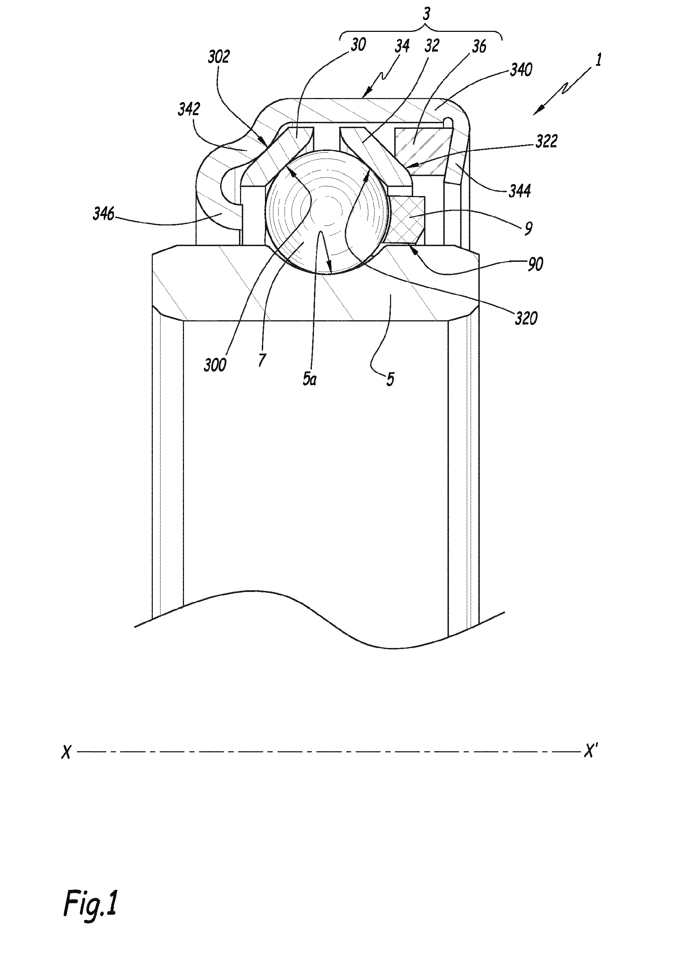

A rolling bearing 1 according to the invention is represented on figure 1. This rolling bearing 1 comprises an outer ring 3, an inner ring 5 and rolling elements, which are balls 7 in this example, which are placed between outer ring 3 and inner ring 5. Rolling bearing 1 defines a central rotation axis X-X'. In this description, the adjectives "axial" and "radial" are used in reference to rotation axis X-X'.

Each of outer ring 3 and inner ring 5 has raceways for balls 7. The raceway of outer ring 3 is formed by two half-raceways 30 and 32, formed by two frustoconical rings, which have a respective frustoconical inner contact surface 300 and 320, in contact with balls 7. Each ball 7 has therefore one contact point with half-raceway 30 and one contact point with the half-raceway 32. The osculation radius of the contact between half-raceways 30 and 32 and balls 7 is therefore infinite. This permits to reduce friction between the half-raceways 30 and 32 and balls 7. The effects of manufacturing inaccuracies are also mitigated.

Half-raceways 30 and 32 are preferably made from stamped metal sheets. Alternatively, half-raceways 30 and 32 may be made from a synthetic material, in particular a plastic material, such as for example PA66.

Half-raceways 30 and 32 are identical. They can therefore be manufactured using the same process and tooling, reducing the manufacturing cost of rolling bearing 1.

Inner ring 5 is massive and comprises a recess 5a forming a raceway for balls 7.

Outer ring 3 comprises a housing 34 in which half-raceways 30 and 32 are mounted. Housing 34 comprises an axial portion 340, which extends along rotation axis X-X'. Housing 34 also comprises a lateral portion 342 and a slightly inclined retaining portion 344 connected to the edges of axial portion 340, and which respectively extend in the vicinity of half-raceways 30 and 32.

Lateral portion 342 has a convex shape with respect to axis X-X', which contacts an outer frustoconical surface 302 of half-raceway 30. This contact permits to guarantee an electrical conductivity between a non-shown device in which rolling bearing 1 is mounted, housing 34, half-raceway 30, balls 7, inner ring 5 and a non-shown shaft on which rolling bearing 1 is mounted. Lateral portion 342 is extended by a curved portion 346 oriented towards balls 7. Curved portion 346 improves the stiffness of housing 34.

Outer ring 3 comprises at least one pre-stressing element 36, arranged between retaining portion 344 and half-raceway 32. In this example, pre-stressing element 36 is an elastomeric ring which contacts an outer frustoconical surface 322 of half-raceway 32. Pre-stressing element 36 exerts an elastic force which keeps half-raceways 30 and 32 in contact with balls 7, reduces misalignments and damps vibrations occurring during operation of rolling bearing 1.

Pre-stressing element 36 is pressed by retaining portion 344 against half-raceway 32 so that pre-stressing element 36 does deform during operation of rolling bearing 1. Retaining portion 344 extend axially in an initial state of housing 34, and is then deformed inwards when half-raceways 30 and 32, balls 7 and pre-stressing element 36 are mounted into housing 34. Thus, retaining portion 344 is inclined toward balls 7.

Rolling bearing comprises a cage 9 adapted to keep balls 7 angularly spaced. Cage 9 is radially arranged between half-raceway 32 and inner ring 5. Cage 9 comprises a heel 90 formed by a substantially cylindrical surface which radially faces inner ring 5. Such a design improves the radial compactness of rolling bearing 1. Cage 9 is preferably made of a plastic material.

According to a non-shown embodiment of the invention, pre-stressing element 36 may be a wave spring centered on axis X-X' and arranged between retaining portion 344 and half-raceway 32 so as to exert an axial elastic force. Such a wave spring provides the advantage of avoiding too important deformations which could harm the pre-stressing function.

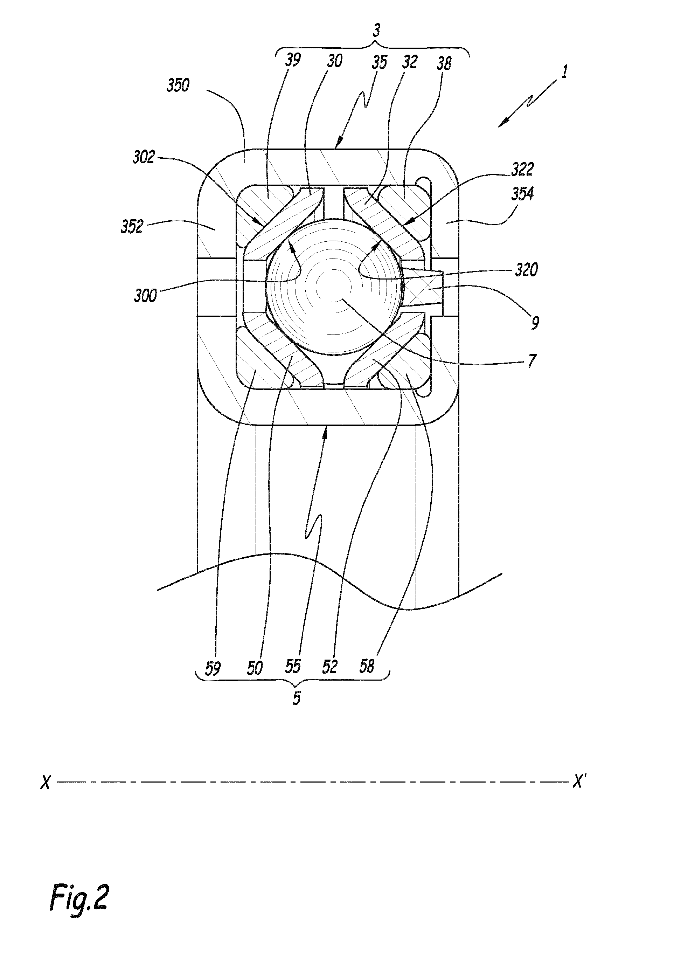

A second embodiment of the invention is represented on figure 2. In this embodiment, elements similar to the ones of the first embodiment have the same references and work in the same way. Only the differences from the first embodiment are detailed hereafter.

In the embodiment of figure 2, outer ring 3 comprises a housing 35 and two pre-stressing elements 38 and 39. Housing 35 comprises an axial portion 350 and two lateral portions 352 and 354. Pre-stressing elements 38 and 39 are formed by toroid elastomeric rings arranged between housing 35 and half-raceways 30 and 32.

In this embodiment, lateral portion 352 is radial with respect to axis X-X' and presses pre-stressing element 39 against the outer surface 302 of half-raceway 30. Lateral portion 354 is also radial with respect to axis X-X' and presses pre-stressing element 38 against the outer surface 322 of half-raceway 32. Portions 352 and 354 constitute retaining portions for the pre-stressing elements 38 and 39.

As an optional embodiment represented only on figure 2, but which can be combined to the embodiment of figure 1, outer ring 3 and inner ring 5 have a similar structure. Inner ring 5 therefore comprises a housing 55, two half-raceways 50 and 52 and two pre-stressing elements 58 and 59 mounted between housing 55 and half-raceways 50 and 52, in the same way as for outer ring 3.

The technical features of the embodiments described here-above can be combined to form new embodiments of the invention.

## Claims

1. Rolling bearing (1) comprising an inner ring (5), an outer ring (3) and rolling elements (7) arranged between the inner (5) and the outer ring (3), at least one of the inner (5) and outer (3) rings comprising:
- a housing (34 ; 35 ; 55),
- two half-raceways (30, 32 ; 50, 52) mounted in the housing (34 ; 35 ; 55), each of the half-raceways comprising a contact surface (300 ; 320) adapted to make a contact with the rolling elements (7), and
- at least one pre-stressing element (36 ; 38, 39 ; 58, 59) arranged between the housing (34 ; 35 ; 54) and one of the half-raceways (30, 32 ; 50, 52),
wherein the half-raceways are formed by frustoconical rings, and wherein the contact surfaces (300 ; 320) of the half-raceways are frustoconical.

2. Rolling bearing according to claim 1, wherein the rolling elements are balls (7).

3. Rolling bearing according to any preceding claim, wherein the housing (34; 35; 55) comprises at least one retaining portion (344; 352; 354) adapted to retain the pre-stressing element (36; 38; 39).

4. Rolling bearing according to claim 3, wherein the retaining portion (344) is inclined toward the rolling elements (7).

5. Rolling bearing according to any preceding claim, wherein it comprises a cage (9) adapted to keep the rolling elements (7) angularly spaced.

6. Rolling bearing according to claim 5, wherein the cage (9) is arranged radially between one of the half-raceways (32) of one (3) of the rings (3, 5) of the bearing (1) and the other ring (5) of the bearing (1).

7. Rolling bearing according to any of claims 1 to 6, wherein the pre-stressing element (36 ; 38, 39, 58, 59) is an elastomeric ring.

8. Rolling bearing according to any of claims 1 to 6, wherein the pre-stressing element is a wave spring.

9. Rolling bearing according to any of claims 1 to 8, wherein the half-raceways (30, 32 ; 50, 52) are made from stamped metal sheets.

10. Rolling bearing according to any of claims 1 to 8, wherein the half-raceways are made from a synthetic material, in particular a plastic material.

11. Rolling bearing according to any preceding claim, wherein the housing (34) comprises a convex portion (342) which is in contact with one (30) of the half-raceways.

12. Rolling bearing according to any preceding claim, wherein the ring (3, 5) of the bearing (1) which comprises half-raceways (30, 32 ; 50, 52) comprises two pre-stressing elements (38, 39 ; 58, 59).

13. Rolling bearing according to any preceding claim, wherein both rings (3, 5) of the rolling bearing (1) comprise a housing (35; 55), two half-raceways (30, 32 ; 50, 52) and at least one pre-stressing element (38, 39 ; 58, 59).
